# EUROPÄISCHE PATENTSCHRIFT

(11) **EP 0 584 821 B1**
(45) Veröffentlichungstag und Bekanntmachung des Hinweises auf die Patenterteilung: **06.11.1996**
(21) Anmeldenummer: 93113666.7
(22) Anmeldetag: 26.08.1993
(51) Int. Cl.: F16D 3/62

(54) **Elastische Wellenkupplung**
Flexible coupling
Accouplement élastique

(30) Priorität: 27.08.1992 DE 4228488
(43) Veröffentlichungstag der Anmeldung: 02.03.1994
(73) Patentinhaber: Fiedler, Kurt, D-65468 Geinsheim (DE)
(72) Erfinder: Wolf, Franz Josef, D-63628 Bad Soden-Salmünster (DE); Fiedler, Kurt, D-67433 Geinsheim (DE)
(74) Vertreter: Schaumburg, Thoenes & Thurn

(56) Entgegenhaltungen:
- DE-A- 4 116 841
- DE-C- 701 263
- FR-A- 1 087 861
- FR-A- 1 491 549

## Beschreibung

Die vorliegende Erfindung betrifft eine elastische Wellenkupplung, insbesondere eine Elastomerlaschen- oder eine Elastomerschlingen-Kupplung nach dem Oberbegriff des Patentanspruchs 1.

Weiter betrifft die Erfindung ein Gleichlaufgelenk, insbesondere Kugel-Gleichlauf-Schiebegelenk nach dem Oberbegriff des Patentanspruchs 13.

Die Erfindung betrifft schließlich ferner die Verwendung einer derartigen elastischen Wellenkupplung oder eines Gleichlaufgelenkes gemäß Patentanspruch 14.

Elastische Wellenkupplungen der beschriebenen Art finden üblicherweise dann Verwendung, wenn es gilt, zwei im wesentlichen fluchtende oder lediglich einen geringen Beugewinkel aufweisende Wellen torsionselastisch miteinander zu verbinden. Als torsionselastisches Bindeglied dient dabei üblicherweise ein gummielastisches Zwischenglied, z.B. eine Hardy-Scheibe, eine Schlingenscheibe oder aber eine Vielzahl von separaten Elastomerlaschen oder -schlingen.

Die bekannten Elastomerlaschen- oder Elastomerschlingenkupplungen weisen üblicherweise als erstes und zweites Kupplungsteil je einen Ringflansch auf, der mit jeweils einer der beiden zu verbindenden Wellen einstückig verbunden oder an dieser im wesentlichen starr befestigbar ist. Die beiden Ringflansche der zu verbindenden Wellen sind im zusammengebauten Zustand parallel zueinander ausgerichtet und weisen auf ihren zueinander weisenden Flächen eine Vielzahl von parallel zueinander und parallel zur Kupplungsachse, d.h. parallel zur Längsachse der fluchtenden Wellen, angeordneten Ankerzapfen auf. In Umfangsrichtung wechseln sich dabei die Ankerzapfen des ersten Flansches mit den Ankerzapfen des zweiten Flansches ab. Jeweils benachbarte Ankerzapfen sind mittels einer beide Ankerzapfen schlingenartig umgreifender Elastomerlasche verbunden. Wenn die erste Welle angetrieben wird, wird über die Ankerzapfen des Flansches der ersten Welle das Antriebsdrehmoment mittels der Elastomerlaschen auf die Ankerzapfen des Flansches der zweiten Welle und damit auf diese Welle selbst elastisch, d.h. unter Zulassung einer bestimmten federkraftbeaufschlagten Torsionsbewegung übertragen.

Derartige elastische Wellenkupplungen zeigen hinsichtlich der Herausfilterung störender mittel- oder niederfrequenter Schwingungen, insbesondere im akustischen Bereich, ein durchaus befriedigendes Verhalten. Verwendung finden solche elastischen Wellenkupplungen im Kraftfahrzeugbau insbesondere im Bereich des Kardanantriebs und im Bereich des Lenkstranges. Nachteilig bei diesen bekannten Wellenkupplungen ist jedoch vor allem, daß sie aufgrund der in axialer Richtung einander gegenüberliegenden Kupplungsflansche und Ankerzapfen eine relativ große axiale Baulänge und aufgrund der den Bereich der Ankerzapfen und Elastomerlaschen nach radial außen übergreifenden Ringflansche bei einem vorgegebenen zu übertragenden Drehmoment einen relativ großen Außendurchmesser aufweisen. Dies bedeutet mit anderen Worten, daß die bekannten elastischen Wellenkupplungen bei stark eingeschränktem Bauraum, wie er beispielsweise im Bereich der Antriebswellen der Vorder- und Hinterräder von Kraftfahrzeugen zur Verfügung steht, praktisch nicht eingesetzt werden können. In der Praxis bedeutet dies, daß insbesondere frontgetriebene Fahrzeuge mit Frontmotor bzw. heckgetriebene Fahrzeuge mit Heckmotor schwingungstechnisch, insbesondere akustisch, hinsichtlich der von den Rädern aufgrund der Fahrbahnunebenheiten übertragenen nieder- und hochfrequenten Schwingungen nicht abgekoppelt werden können; bei diesen Fahrzeugen werden die entsprechenden Störschwingen unmittelbar metallisch auf Getriebe und Motorblock und damit lediglich über die Motorlagerung geringfügig gedämpft auf das Chassis und den Fahrgastraum übertragen.

Ausgehend von diesem Stand der Technik ist es die Aufgabe der vorliegenden Erfindung, eine drehmomentübertragende elastische Kupplung zwischen zwei Wellen zu schaffen, die bei minimalem Bauraum in der Lage ist, hohe Drehmomente elastisch zu übertragen, und gleichzeitig eine gute akustische und schwingungsdynamische Isolierung der beiden Wellen ermöglicht.

Diese Aufgabe wird durch eine elastische Wellenkupplung nach der Lehre des Patentanspruchs 1 gelöst.

Es ist weiter eine Aufgabe der vorliegenden Erfindung, ein Gleichlaufgelenk, insbesondere Kugel-Gleichlauf-Verschiebegelenk unter Verwendung einer elastischen Wellenkupplung nach Anspruch 1 zu schaffen, die den benötigten Bauraum im Bereich der Antriebswellen insbesondere von frontgetriebenen Kraftfahrzeugen bei einer sicheren elastischen Drehmomentübertragung und gleichzeitig hoher akustischer und schwingungsdynamischer Isolierung minimiert.

Weitere vorteilhafte Ausgestaltungen der Erfindung sind Gegenstand der Unteransprüche.

Die elastische Wellenkupplung der Erfindung weist zwei Kupplungsteile auf, nämlich ein erstes Kupplungsteil, das beispielsweise Teil einer ersten Welle ist oder aber als separates Teil mit dieser Welle verbindbar sein kann, und ein zweites Kupplungsteil, das im wesentlichen entsprechend dem ersten Kupplungsteil ausgestaltet ist und Teil einer zweiten Welle oder zumindest mit dieser verbindbar ist. Jedes der beiden Kupplungsteile weist mindestens zwei Ankerelemente auf, die einander jeweils zumindest im wesentlich diametral bezüglich der Kupplungsachse, d.h. der Längsachse der zu verbindenden Wellen, gegenüberliegen. Eine exakt diametrale Anordnung ist selbstverständlich nur bei einer geraden Anzahl von Ankerelementen pro Kupplungsteil möglich; bei einer ungeraden Anzahl von Ankerelementen je Kupplungsteil erfolgt eine entsprechend symmetrische Anordnung der Ankerelemente mit jeweils identischen Zentrumswinkeln zwischen den einzelnen Ankerelementen jedes Kupplungsteilsk.

Sämtliche Ankerelemente der beiden Kupplungsteile liegen dabei im wesentlichen in ein- und derselben Radialebene der Kupplung und sind so angeordnet, daß die Ankerelemente des ersten Kupplungsteils und die Ankerelemente des zweiten Kupplungsteils in Umfangsrichtung einander alternierend folgen. Mit anderen Worten, die Ankerelemente der beiden Kupplungsteile greifen dabei nach Art einer Klauenkupplung in axialer Richtung ineinander ein, ohne sich dabei jedoch in Umfangsrichtung zu berühren. Die Ankerelemente dienen dabei insbesondere nicht zur direkten Übertragung des Drehmoments zwischen beiden Wellen durch unmittelbaren Kontakt, sondern primär als Träger für Ankerzapfen zur Aufnahme der kraftübertragenden Elastomerlaschen.

Jedes der Ankerelemente weist zwei im wesentlichen nach radial auswärts weisende und in Umfangsrichtung aufeinanderfolgende Ankerzapfen auf. "Im wesentlichen radial auswärts" bedeutet dabei keineswegs ausschließlich eine streng radiale Ausrichtung der Ankerzapfen; vielmehr hängt die genaue Ausrichtung im wesentlichen von der Gestaltung der nach radial außen weisenden Umfangsflächen der Ankerelemente ab. So kann beispielsweise im Fall von vier Ankerelementen, d.h. je zwei Ankerelemente pro Kupplungsteil, vorgesehen sein, daß jedes Ankerelement nicht eine kreisbogenförmige bzw. kreiszylinderbogenförmige Außenfläche aufweist, sondern zwei nach radial außen weisende Flächen im Winkel von in etwa 90°, wobei je ein Ankerzapfen auf je einer der senkrecht zueinander angeordneten Außenflächen angeordnet ist. Bei einer derartigen Gestaltung verlaufen die Ankerzapfen dementsprechend um einen bestimmten Betrag parallel zum Radius versetzt. Wesentlich für das Wesen der vorliegenden Erfindung ist dabei lediglich, daß die Längsachsen aller Ankerzapfen in ein- und derselben Ebene, nämlich der Radialebene der Kupplung, liegen und die Ankerzapfen von der Mittelachse der Kupplung wegweisen.

Die Ankerzapfen dienen zur Aufnahme der Elastomerlaschen bzw. des Elastomerringes, wobei jedes der Ankerelemente mit dem jeweils benachbarten Ankerelement über eine Elastomerlasche bzw. einen Elastomerringabschnitt drehmomentübertragend verbunden ist. Mit anderen Worten, jeweils die direkt benachbarten Ankerzapfen zweier benachbarter Ankerelemente sind mittels einer ring- oder schlingenförmigen Elastomerlasche elastisch drehmomentübertragend verbunden. Die Elastomerlaschen können dabei im Prinzip in beliebiger Weise als Einzellaschen oder aber als geschlossen umlaufender Elastomerring ausgebildet sein, ohne den Boden der Erfindung zu verlassen.

Es ist also die Grundidee der vorliegenden Erfindung, die beiden zu koppelnden Kupplungsteile nicht mehr axial beabstandet unter Zwischenlage der Elastomerlaschen bzw. des Elastomerrings anzuordnen, sondern die beiden Kupplungsteile in Form der Ankerelemente in ein- und die gleiche Radialebene der Kupplung zu bringen und dadurch den axialen Bauraum auf das absolut notwendige Minimum zu verringern. Die Elastomerlaschen werden nicht mehr zwischen den Kupplungsteilen angeordnet, sondern radial außen. Dabei hat die radial äußere Anordnung der drehmomentübertragenden Glieder den weiteren Vorteil, daß aufgrund des längeren bezüglich der Kupplungsachse wirkenden Hebelarms bei gegenüber den elastischen Wellenkupplungen nach dem Stand der Technik unveränderten radialen Abmessungen höhere Drehmomente übertragen werden können bzw. bei gegebenem Drehmoment eine kleinere radiale Bauform erreicht werden kann.

Die Ankerelemente können im einfachsten Fall direkt an die jeweiligen Wellenenden bzw. an entsprechende Wellenflansche angeformt sein. Vorzugsweise jedoch bestehen die Ankerelemente aus separaten vorgefertigten Ankerplatten, wobei aus Gründen eines möglichst geringen Bau- und Bauteileaufwands sämtliche Ankerplatten beider Kupplungsteile im wesentlichen identisch ausgestaltet sind. Dabei weisen sämtliche Ankerplatten Befestigungsmittel auf, mit denen die Ankerplatten an der ihnen jeweils zugeordneten Welle im wesentlichen starr befestigt werden können. Der Vorteil dieser Ausgestaltung besteht vor allem darin, daß die gesamte Kupplung, bestehend im wesentlichen aus den Ankerplatten und den radial außen umgreifenden aufgesteckten Elastomerlaschen, vormontiert werden kann und bei der Endmontage nur noch zwischen die zu verbindenden Wellenenden eingesetzt und mit diesen verbunden werden muß.

Gemäß einem Ausführungsbeispiel bestehen die Befestigungsmittel in einfachster Weise aus jeweils mindestens einer parallel zur Kupplungsachse verlaufenden durchgehenden Bohrung oder Gewindebohrung in jeder Ankerplatte zur Aufnahme eines Schraubenbolzens. Mit anderen Worten, zur Montage der vormontierten Wellenkupplung muß bei diesem Ausführungsbeispiel nur ein Schraubenbolzen entweder durch die Durchgangsbohrung der Ankerplatten gesteckt und in eine entsprechende Gewindebohrung am Wellenflansch eingeschraubt oder aber der Schraubenbolzen durch eine Durchgangsbohrung am Wellenflansch gesteckt und in die entsprechende Gewindebohrung der Ankerplatte eingeschraubt werden.

Die Wellenkupplung wie vorstehend beschrieben ist primär dazu geeignet, Drehmomente torsionselastisch und insbesondere akustisch abkoppelnd zwischen den beiden Wellen zu übertragen. Zwar lassen sich grundsätzlich auch Schwingungen und Stöße in Kupplungsrichtung, d.h. in axialer Richtung der zu koppelnden Wellen durch die radial außen liegenden die gesamte Kupplung umgreifenden Elastomerlaschen aufnehmen, doch führt dies im Betrieb zu einer Änderung der wirksamen Länge der Elastomerlaschen und damit zu einer Veränderung der Drehmomentübertragungscharakteristik der Elastomerlaschen.

Bei einem bevorzugten Ausführungsbeispiel der Erfindung sind daher die Ankerplatten an ihren jeweils zueinander weisenden Flächen bzw. Flächenbereichen unter Bildung eines im wesentlichen L-förmigen Absatzes so ausgestaltet, daß die jeweils in Umfangsrichtung benachbarten Ankerplatten des ersten und des zweiten Kupplungsteils einander zumindest abschnittsweise in der Radialebene der Kupplung über- und in Richtung der Kupplungsachse unter Bildung eines im wesentlichen Z-förmigen Zwischenraums hintergreifen. Mit anderen Worten, die beiden L-förmigen Kantenbereiche der zueinander weisenden Flächen zweier benachbarter Ankerplatten über- bzw. hintergreifen einander so, daß zum einem im wesentlichen in Umfangsrichtung ein Abstand bzw. Zwischenraum zwischen den in Umfangsrichtung zueinander weisenden Flächen der Ankerplatten verbleibt, wobei dieser Abstand in Abhängigkeit von den Kenndaten der Elastomerlaschen und dem zu übertrgenden Drehmoment so gewählt werden muß, daß sich die jeweils benachbarten Ankerplatten des ersten und des zweiten Kupplungsteiles auch unter Vollast nicht metallisch berühren. Zum anderen verbleibt im wesentlichen zwischen den in Kupplungsrichtung zueinander weisenden einander überlappenden Flächen der Ankerplatten ein Zwischenraum, der verhindert, daß sich unter Normalbedingungen, d.h. bei relativ kleinen Schwingungen und Belastungen in Kupplungsrichtung, die Ankerplatten metallisch berühren und so Störschwingungen ungehindert übertragen. Durch die Überlappung wird jedoch sichergestellt, daß bei Spitzenbelastungen in Kupplungsrichtung diese durch den direkten Kontakt der beiden Ankerplatten aufgenommen werden und somit keine Beschädigung oder gar Zerstörung der Elastomerlaschen verursachen können.

Der Z-förmige Zwischenraum erstrecht sich vorzugsweise im wesentlichen vom zentralen Bereich der Wellenkupplung bis in den Bereich der Ankerzapfen, wobei sich, abhängig von der Gestaltung der Ankerplatten, die Z-Form nach radial außen aufweitet oder aber über die gesamte radiale Länge ein gleichbleibendes Z-Profil verbleibt.

Ein weiterer Vorteil dieser Z-förmigen Überlappung der Ankerplatten besteht darin, daß selbst bei Bruch einer oder mehrerer Elastomerschlingen die Kupplung ihre Funktion beibehält, wobei dann selbstverständlich keinerlei Schwingungsisolierung mehr erfolgt.

Um die Elastomerlaschen auch von kleineren Belastungen in Richtung der Kupplungsachse freizuhalten und um einen metallischen Kontakt zwischen den Ankerplatten und damit zwischen den beiden Kupplungsteilen in jedem Fall zuverlässig zu verhindern, ist es gemäß einem bevorzugten Ausführungsbeispiel der Erfindung vorgesehen, zwischen den den Z-förmigen Zwischenraum bildenden Flächenbereichen der jeweils benachbarten Ankerplatten, die in Richtung der Kupplungsachse einander gegenüberliegen, ein Elastomerdämpferelement anzuordnen. Dieses Elastomerdämpferelement, das den gesamten Zentral-Bereich des Z-Spaltes ausfüllen oder aber lediglich als gummiartige Beschichtung an den überlappenden Flächenbereichen ausgestaltet sein kann, dient dabei ausschließlich zur Dämpfung bzw. schwingungsmäßigen Abkoppelung in Kupplungsrichtung.

Gemäß einem weiteren Ausführungsbeispiel kann auch vorgesehen sein, ein Elastomerelement zwischen bzw. eine Elastomerbeschichtung an den Flächenbereichen der jeweils benachbarten Ankerplatten vorzusehen, die in der Radialebene bzw. in Umfangsrichtung einander gegenüberliegen. Um jedoch die Drehmomentübertragungscharakteristik ausschließlich durch das elastische Verhalten der Elastomerlaschen zu bestimmen, ist es bei diesem Ausführungsbeispiel jedoch zweckmäßig, lediglich eine dünne Elastomerbeschichtung an den zueinander weisenden Flächen vorzusehen, um zum einen für den Fall einer einen bestimmten Wert überschreitenden Spitzenbelastung einen metallischen Kontakt sicher zu vermeiden und zum anderen die Notlaufeigenschaften bei Beschädigung der Wellenkupplung durch Bruch einer oder mehrere Elastomerlaschen zu verbessern.

Insbesondere bei der Verwendung einer elastischen Wellenkupplung gemäß der Erfindung zur Drehmomentübertragung mit hohen Drehzahlen ist es von Vorteil, wenn bereits bei der Vormontage der Wellenkupplung eine genaue Zentrierung aller Teile erfolgt. Nach einem bevorzugten Ausführungsbeispiel sind daher die Ankerplatten so angeordnet und/oder ausgebildet, daß im radial inneren zentralen Bereich, bezogen auf die Kupplungsachse, eine in Kupplungsrichtung durchgehende Ausnehmung zur Aufnahme eines der Innenkontur der Ausnehmung im wesentlichen formkomplementären Zentrier- und/oder Stützringes gebildet wird. Gerade im Hinblick auf die Verwendung bei hohen Drehzahlen werden sowohl die Ausnehmung als auch der Zentrier- und/oder Stützring vorzugsweise rotationssymmetrisch, symmetrisch, insbesondere kreis- bzw. ring- oder scheibenförmig ausgebildet sein. Nach Einlegen des Zentrier- und/oder Stützringes bzw. der Stützscheibe ist auf dessen äußerer Umfangsfläche zumindest bereichsweise die jeweilige radial innere die Ausnehmung bildende Umfangsfläche der Ankerplatten in Anlage bringbar. Ein weiterer Vorteil dieses Zentrier- und/oder Stützringes ist, daß sich bei einem geringen radialen Übermaß des Rings gegenüber der Ausnehmung eine genau definierte Vorspannung der Elastomerlaschen erzielen läßt. Schließlich dient der Zentrier- und/oder Stützring dazu, eine unerwünschte Verdrehung einer oder mehrerer Ankerplatten aufgrund des bezüglich der Befestigung der Ankerplatten an der jeweiligen Welle außermittigen Kraftangriffs der Elastomerlaschen an den Ankerzapfen aufzunehmen, wenn sich nach längerem Betrieb oder aufgrund unsachgemäßer Montage eine Befestigungsschraube gelockert hat.

Um neben der radialen Zentrierung auch eine axiale Festlegung der Ankerplatten zueinander zu ermöglichen, weist gemäß einem bevorzugten Ausführungsbeispiel der Zentrier- und/oder Stützring auf seiner Außenfläche einen ringförmig geschlossen oder unterbrochen umlaufenden im Querschnitt wulstartigen, insbesondere torusteilschalenförmigen, rechteckigen, halbkreisförmigen oder dreieckigen Vorsprung auf, der mit einer dazu im wesentlichen form- und funktionskomplementären Ausnehmung in der jeweiligen Innenwandfläche der die durchgehende Ausnehmung bildende Ankerplatten in Eingriff bringbar ist.

Insbesondere wenn der Zentrierring ausschließlich eine Zentrierfunktion, insbesondere für Zwecke der Vormontage, erfüllen soll und daher die auf den Ring wirkenden Kräfte relativ gering sind, genügt es, diesen Ring aus Kunststoff zu fertigen. Dabei reicht das Kunststoffmaterial des Zentrierringes bzw. der Zentrierscheibe im Regelfalle aus, um die Bildung einer unerwünschten Körperschallbrücke zwischen den Ankerplatten der beiden Kupplungsteile zu verhindern. Wenn jedoch die Abstützfunktion des Ringes, verbunden mit relativ hohen aufzunehmenden Kräften, im Vordergrund steht, wird der Ring aus Festigkeitsgründen aus einem entsprechenden Metall herzustellen sein.

Um insbesondere bei der Verwendung eines derartigen Zentrier- und/oder Stützringes aus Metall einen mittelbaren metallischen Kontakt zwischen den Ankerplatten beider Kupplungsteile über den Ring und somit die Ausbildung einer Körperschallbrücke zuverlässig zu verhindern, besteht gemäß einem weiteren Ausführungsbeispiel der Zentrier- und/oder Stützring aus zwei separaten axial aufeinanderfolgenden Zentrierringen, die sich nicht unmittelbar berühren. Nicht unmittelbar bedeutet dabei insbesondere, daß zwischen den beiden Zentrierringen ein schallisolierendes Kunststoff- bzw. Elastomerelement, beispielsweise in Form einer Scheibe, eingesetzt ist, das eine Berührung der beiden Ringteile zuverlässig verhindert. Der erste der beiden Zentrierringe wirkt dabei ausschließlich mit den zugeordneten Innenflächen der Ankerplatten des ersten Kupplungsteils und der zweite Zentrierring ausschließlich mit den zugeordneten Innenflächen des zweiten Kupplungsteils zentrierend und/oder abstützend zusammen. Dies wird beispielsweise in einfachster Weise dadurch erreicht, daß die die durchgehende Ausnehmung bildenden radial inneren Flächenbereiche der Ankerplatten in Kupplungsrichtung abgestuft sind, wobei die Ankerplatten des ersten Kupplungsteils beispielsweise in Richtung der ersten Welle einen zumindest geringfügig größeren wirksamen Innendurchmesser aufweisen als in Richtung der zweiten Welle. Für die Ankerplatten des zweiten Kupplungsteils gilt dabei genau die umgekehrte Gestaltung.

Dies bedeutet mit anderen Worten, daß bei der Verwendung zweier Zentrierscheiben mit gleichem Außendurchmesser, der im wesentlichen dem kleineren Innendurchmesser der Ausnehmung entspricht, sich die Ankerplatten des ersten Kupplungsteils auf den Zentrierring, der näher der zweiten Welle liegt, abstützen, während sich die Ankerplatten des zweiten Kupplungsteils ausschließlich auf den Zentrierring der näher der ersten Welle liegt, abstützen. Sämtliche Ankerplatten eines Ankerteils stützen sich also ausschließlich auf dem ihnen zugeordneten Zentrierring ab, während sie dem anderen Zentrierring mit radialem Abstand gegenüberliegen. Dadurch ist eine sichere und zuverlässige schwingungsmäßige, insbesondere akustische Abkopplung gewährleistet.

Insbesondere wenn hohe und höchste Drehmomente zu übertragen sind, sind gemäß einem Ausführungsbeispiel der Erfindung im Elastomer der Elastomerlaschen bzw. des Elastomerringes schlingenförmige Verstärkungseinlagen eingebettet, insbesondere einvulkanisiert, die die zueinander weisenden Ankerzapfen zweier benachbarter Ankerplatten umgreifen. Insbesondere bestehen diese Verstärkungseinlagen aus hoch festem Fasermaterial. Die Form der Schlingen ist dabei an sich beliebig und hängt lediglich von der gewünschten Torsionscharakteristik der Elastomerkupplung ab. Vorzugsweise verlaufen jedoch die Schlingen nach Art einer Acht oder flach stadelförmig nach Art eines O, wobei die zwischen den Ankerzapfen verlaufenden Schlingenschenkel parallel ausgerichtet oder durch eine Spreizfeder oval aufgespreizt sind.

Bei der Wahl des Schlingen- und Elastomermaterials ist zu beachten, daß dies auf die zu erwartenden Drehmomente und die gewünschte Torsionsweichheit bzw. den zulässigen Torsionswinkel abgestimmt werden muß, um bei einem gegebenen, sich im wesentlichen in Umfangsrichtung erstreckenden Abstand zwischen den benachbarten Ankerplatten beider Kupplungsteile einen metallischen Kontakt und damit einen unmittelbaren starren Mitnehmereffekt unter allen Umständen zu vermeiden.

Die elastische Wellenkupplung der Erfindung ist grundsätzlich im Bereich aller elastisch zu übertragenden Drehmomente zu verwenden. Aufgrund des minimalen Bauraums jedoch, kann die elastische Wellenkupplung in vorteilhafter Weise in den Radantriebswellen von Kraftfahrzeugen Verwendung finden. Vorzugsweise ist dabei die elastische Wellenkupplung der Erfindung in das dort verwendete Gleichlaufgelenk, insbesondere getriebeseitige Gleichlaufgelenk integriert.

Die Erfindung liefert daher ebenfalls ein Gleichlaufgelenk, insbesondere Kugel-Gleichlauf-Verschiebegelenk mit einem eingangsseitigen und einem ausgangsseitigen Wellenstutzen, wobei die beiden Wellenstutzen über das Gelenk unter Zulassung eines bestimmten Beugewinkels und einer axialen Verschiebebewegung und unter Verwendung einer elastischen Wellenkupplung wie vorstehend beschrieben drehmomentübertragend gekoppelt sind. Das für sich bekannte Gleichlaufgelenk ist dabei üblicherweise antriebs-, d.h. getriebeseitig durch einen Gehäuseflansch abgeschlossen, der zum einem mit dem Gelenk-außenring und zum anderen mit der Antriebswelle bzw. dem Getriebeabtriebsstutzen starr verbunden ist. Gemäß der Erfindung kann das bekannte Gleichlaufgelenk im wesentlichen unverändert übernommen werden, wobei lediglich der erste Gehäuseflansch geändert werden muß.

Das Gleichlaufgelenk der Erfindung ist daher gekennzeichnet durch einen ersten Gehäuseflansch, der antriebsseitig im wesentlichen starr mit dem Gelenk-Außenring gekoppelt ist, das Gelenk abdeckt und Mittel zur starren Befestigung der Ankerelemente bzw. -platten des ersten Kupplungsteils auf seiner dem Gelenk abgewandten Seite aufweist, und einen zweiten Gehäuseflansch, der den ersten Gehäuseflansch unter Bildung eines Innenraums zumindest bereichsweise übergreift und an seiner inneren dem ersten Gehäuseflansch zugewandten Seite Mittel zur starren Befestigung der Ankerelemente bzw. -platten des zweiten Kupplungsteils sowie an seiner äußeren Seite eine Antriebs-Wellenstutzen oder einen Anschluß für eine Antriebswelle aufweist. Mit anderen Worten, die elastische Kupplung, die die beiden Gehäuseflansche und damit die Antriebs- und Abtriebswelle torsionselastisch verbindet, ist in einen separaten, dem eigentlichen Gleichlaufgelenk nach- bzw. vorgeschalteten Gehäuse angeordnet.

Die Erfindung ist im folgenden anhand von lediglich Ausführungsbeispiele darstellenden Zeichnungen näher erläutert. Es zeigt:
- Fig. 1: in schematischer Darstellung in seitlicher Ansicht teilweise aufgebrochen ein Ausführungsbeispiel einer elastischen Wellenkupplung der Erfindung mit 4 Ankerplatten;
- Fig. 2: ebenfalls in schematischer Darstellung einen Längsschnitt, bezogen auf die Kupplungsachse, durch das Ausführungsbeispiel nach Fig. 1 entlang der Linie A-A;
- Fig. 3: in schematischer Darstellung einen Längsschnitt, bezogen auf die Kupplungsachse, durch das Ausführungsbeispiel nach Fig. 1 entlang der Linie B-B;
- Fig. 4: in lediglich schematischer nicht maßstäblicher Darstellung einen geteilten Zentrier- und/oder Stützring gemäß der Erfindung;
- Fig. 5: ein Gleichlaufgelenk unter Verwendung einer elastischen Wellenkupplung der Erfindung in teilweise aufgebrochener Darstellung; und
- Fig. 6: das Gleichlaufgelenk nach Fig. 5, um 90° um die Kupplungsachse verdreht, ebenfalls in teilweise aufgebrochener Darstellung.

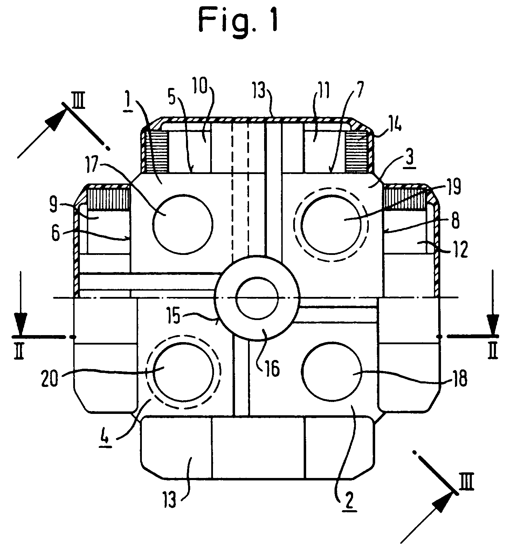

In der Fig. 1 ist ein erstes Ausführungsbeispiel einer elastischen Wellenkupplung gemäß der Erfindung dargestellt. Diese Wellenkupplung weist vier Ankerplatten 1,2 und 3,4 auf, wobei die einander diametral gegenüberliegenden Ankerplatten 1 und 2 das erste Kupplungsteil und die ebenfalls einander diametral gegenüberliegenden Ankerplatten 3 und 4 das zweite Kupplungsteil bilden. Sämtliche Ankerplatten 1,2 und 3,4 stellen völlig separate Bauelemente dar und sind im wesentlichen gleich ausgebildet.

Die Ankerplatten 1,2 und 3,4 weisen im wesentlichen die Form eines Quaders mit jeweils zwei nach radial außen weisenden Umfangsflächen 5,6 und 7,8 auf. Jede der Ankerplatten 1,2 und 3,4 weist auf ihren nach radial außen weisenden Umfangsflächen 5,6 und 7,8 je einen ebenfalls nach radial außen vorspringenden Ankerzapfen 9,10 und 11,12 pro Umfangsfläche auf. Mit anderen Worten, jede der Ankerplatten 1,2 und 3,4 trägt zwei in Umfangsrichtung aufeinanderfolgende Ankerzapfen 9,10 bzw. 11,12.

Die jeweils unmittelbar benachbarten Ankerzapfen 10 und 11 der jeweils benachbarten Ankerplatten 1,3 sind über eine angespritzte und anvulkanisierte Elastomerlasche 13 drehmomentübertragend verbunden. Das zu übertragende Drehmoment wirkt dabei um die Kupplungsachse, die in der Darstellung nach Fig. 1 durch den Mittelpunkt der Wellenkupplung und senkrecht zur Zeichenebene verläuft. Die Elastomerlaschen 13 sind durch hochfeste fadenschlingen 14, die die jeweils benachbarten Ankerzapfen 10 und 11 schlingenartig umgreifend verbinden, verstärkt.

Im radial inneren Bereich der Kupplung ist durch die radialen Innenflächen der Ankerplatten 1,2 und 3,4 eine in Kupplungsrichtung durchgehende Ausnehmung 15 gebildet, in die ein Zentrierring 16 eingesetzt ist, auf dessen nach radial außen weisender Umfangsfläche die nach radial innen weisenden Umfangsflächen der Ankerplatten 1,2 und 3,4 sich abstützend zur Auflage kommen.

An ihren in Kupplungsrichtung weisenden Flächen sind die Ankerplatten 1,2 und 3,4 mit Befestigungsmitteln in Form von durchgehenden Bohrungen 17,18 bzw. Gewindebohrungen 19,20 versehen. Dabei werden die Ankerplatten 1,2 des ersten Kupplungsteiles über durchgehende Schraubenbolzen, die in entsprechende Gewindebohrungen eines nicht dargestellten Befestigungsflansches an der ersten Welle eingreifen, starr an der ersten der beiden drehmomentübertragend zu koppelnden Wellen verbunden, während die beiden Ankerplatten 3,4 in ähnlicher Weise mit einem Befestigungsflansch der zweiten Welle verschraubt werden.

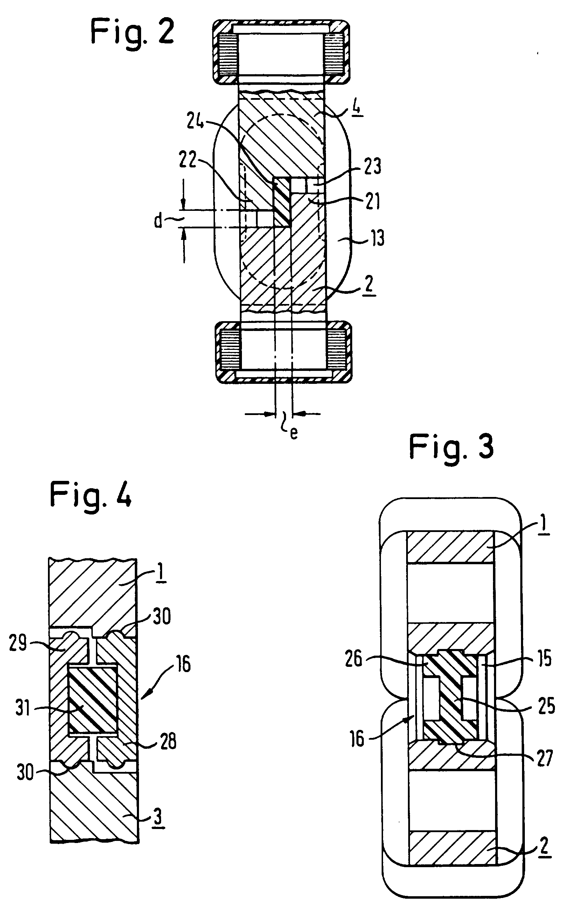

Wie insbesondere der Darstellung nach Fig. 2 zu entnehmen ist, weist jede der Ankerplatten 1,2 und 3,4 an jeweils beiden zu den jeweils benachbarten Ankerplatten weisenden Seiten einen L-förmig abgestuften Vorsprung auf, dessen Längsachse sich in genau radialer Richtung erstreckt. Die Anordnung der Ankerplatten zueinander soll im folgenden lediglich beispielhaft anhand der Ankerplatten 2 und 4 beschrieben werden, wobei die relative Anordnung zueinander und die Ausgestaltung der Ankerplatten für sämtliche drei anderen möglichen Ankerplattenpaarungen identisch ist. Die Ankerplatten 2 und 4 sind so relativ zueinander angeordnet, daß sich die L-förmigen Vorsprünge der zueinander weisenden Flächenbereiche in Umfangsrichtung über- und in Kupplungsrichtung hintergreifen. Dabei wird durch den schenkelartigen Vorsprung 21 der Ankerplatte 2 und den schenkelartigen Vorsprung 22 der Ankerplatte 4 ein Z-förmiger Spalt 23 gebildet, dessen Längsrichtung sich exakt radial erstreckt. Aufgrund dieses Spaltes liegen sich die Ankerplatten 2 und 4 daher in Umfangsrichtung mit dem Abstand d und in Kupplungsrichtung mit dem Abstand e gegenüber, ohne sich in irgendeiner Weise zu berühren. Die einzige Verbindung zwischen der Ankerplatte 2 des ersten Kupplungsteils und der Ankerplatte 4 des ersten Kupplungsteils erfolgt über die Elastomerschlinge 13.

Die Größe des Spaltes d ist dabei in Abhängigkeit von der Torsionssteifigkeit der Elastomerlaschen 13 und den zu über-tragenden Drehmomenten so zu wählen, daß selbst unter Spitzenlast aufgrund der Relativbewegungen der beiden Kupplungsteile und damit der Ankerplatten 2 und 4 kein direkter, insbesondere metallischer Kontakt zwischen den Ankerplatten 2 und 4 bzw. den in Umfangsrichtung und zueinander weisenden Flächenbereichen der Ankerplatten 2 und 4 erfolgt.

Im Spalt e ist ein Elastomerdämpferelement 24 diesen im wesentlichen ganz ausfüllend angeordnet. Dies bedeutet mit anderen Worten, daß sich die Ankerplatten 2 und 4 des ersten und zweiten Kupplungsteils in jedem Fall mittelbar unter Zwischenlage des Elastomerdämpferelementes 24 berühren, wobei jedoch aufgrund der Materialeigenschaften des Elastomers mittel- und niederfrequente Schwingungen, insbesondere im akustischen Bereich in Kupplungsrichtung zuverlässig isoliert werden. Durch das Elastomerdämpferelement 24 wird somit zum einen eine im wesentlichen genaue axiale Festlegung der Ankerplatten zueinander ermöglicht und zum anderen werden die Elastomerlaschen 13 von sämtlichen in Kupplungsrichtung wirkenden Kräften und Schwingungen entlastet.

In der Fig. 3 ist der in der Ausnehmung 15 angeordnete Zentrier- und Stützring 16 näher gezeigt. Der Zentrierring 16 besteht aus einem scheibenförmigen Grundkörper 25 und einem ringförmig umlaufenden Anlagebereich 26, an dessen radial äußerer Umfangsfläche die radial innere Umfangsfläche der Ankerplatten 1,2 und 3,4 abstützend zur Anlage kommt. Bereits aufgrund dieser Anordnung ist eine eindeutige Mittenzentrierung gewährleistet. Um nun zum einen den Zentrierring 16 gegen ein Heraus fallen zu sichern und zum anderen auch die axiale Zentrierung der Ankerplatten zueinander zu gewährleisten oder zu verbessern, weist der Zentrierring auf seiner radial äußeren Umfangsfläche einen im Querschnitt flach rechteckigen geschlossen umlaufenden Vorsprung 27 auf, der in eine entsprechende Ausnehmung in den radialen Innenflächen der Ankerplatten 1,2 und 3,4 eingreift. Da über den Zentrierring ein mittelbarer Kontakt zwischen den Ankerplatten 1 und 2 des ersten Kupplungsteils und den Ankerplatten 3 und 4 des zweiten Kupplungsteils besteht, ist der Zentrierring bei diesem Ausführungsbeispiel aus Kunststoff hergestellt, insbesondere aus einem schwingungstechnisch insbesondere akustisch abkoppelnden Kunststoffmaterial.

In Fig. 4 ist ein weiteres Beispiel eines Zentrier- und Stützringes dargestellt. Der Zentrierring 16 ist bei diesem Ausführungsbeispiel in zwei axial beabstandete Zentrierringe 28 und 29 aufgelöst. Diese beiden Zentrierringe weisen im wesentlichen den gleichen Außendurchmesser auf und tragen auf ihrer radial äußeren Umfangsfläche in der vorstehend beschriebenen Weise einen ringförmig umlaufenden Verriegelungswulst 30. Zwischen den beiden Zentrierringen 28 und 29 ist ein Kunststoffstopfen 31, beispielsweise aus einem Elastomermaterial, so eingelegt, daß sich die beiden Zentrierringe 28 und 29 nicht berühren und insoweit schwingungstechnisch, insbesondere akustisch abgekoppelt sind.

Im Gegensatz zum Ausführungsbeispiel nach Fig. 3 weisen die Innenumfangsflächen der Ankerplatten 1,2 und 3,4, die die Ausnehmung 15 bilden, in Kupplungsrichtung nicht den gleichen wirksamen Innendurchmesser auf; sie sind vielmehr in Kupplungsrichtung mittig abgestuft. Diese Abstufung ist dabei so ausgeführt, daß die Abstufung der Ankerplatten 1 und 2 des ersten Kupplungsteiles auf der zur ersten Welle weisenden, in der Darstellung nach Fig. 4 linken Seite, einen größeren Innendurchmesser aufweist, während die Abstufung der Ankerplatten 3 und 4 auf der zur zweiten Welle weisenden, in der Darstellung nach Fig. 4 rechten Seite, den größeren Innendurchmesser aufweist. Der jeweils kleinere Innendurchmesser der Abstufung entspricht dabei im wesentlichen dem Außendurchmesser der Zentrierringe. Dies bedeutet nun mit anderen Worten, daß sich die Ankerplatten 1 und 2 des ersten Kupplungsteils ausschließlich auf den Zentrierring 28 und die Ankerplaten 3 und 4 des zweiten Kupplungsteils ausschließlich auf den Zentrierring 29 abstützen. Der Durchmesser der größeren Abstufung muß dabei selbstverständlich so gewählt werden, daß in jedem Fall eine Berührung mit dem jeweiligen Zentrierring ausgeschlossen wird.

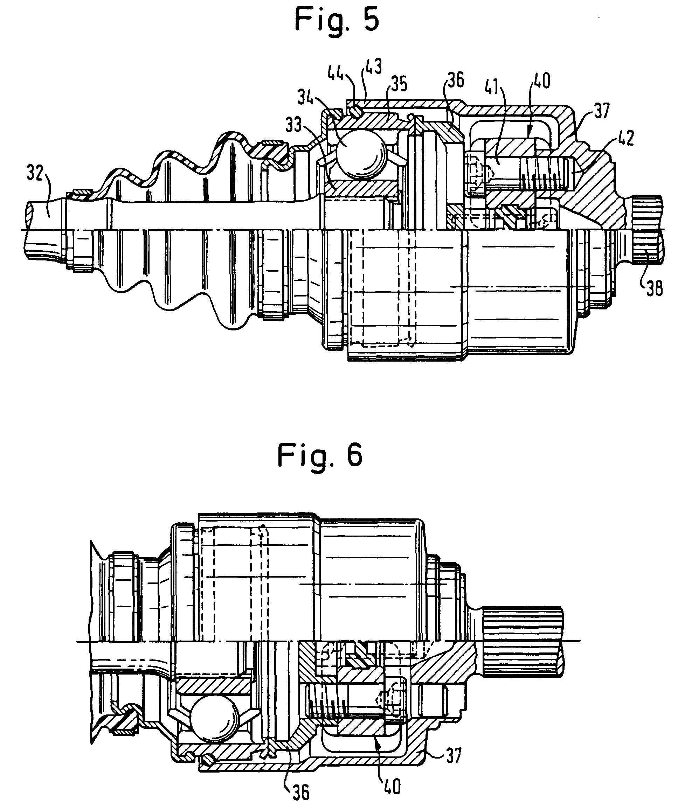

In Fig. 5 ist ein Kugel-Gleichlauf-Verschiebegelenk unter Verwendung einer elastischen Wellenkupplung wie vorstehend beschrieben dargestellt. Das Gleichlaufgelenk weist eine Abtriebswelle 32 auf, die über den Gelenkinnenring 33 und die Gelenkkugeln 34 im wesentlichen starr drehmomentübertragend mit dem Außenring 35 verbunden ist. Aufgrund der an sich bekannten Kugelgelenk-Konstruktion ist jedoch ein Verschwenken der Abtriebswelle 32 gegenüber dem Gelenkaußenring 35 möglich. Ebenso ist aufgrund der bekannten Konstruktion eine Verschiebebewegung der Abtriebswelle 32 im Gelenk ermöglicht. Starr drehmomentübertragend ist mit dem Außenring 35 des Gelenkes ein erster Außenflansch 36, hier durch Reibschweißen, verbunden. Dieser Außenflansch dient dabei zum einen zur sicheren und zuverlässigen Abdeckung des eigentlichen Kugel-Gelenkes und zum anderen zur Befestigung des ersten Kupplungsteiles der elastischen Wellenkupplung.

Den ersten Gehäuseflansch 36 und das Gelenk selbst im wesentlichen übergreifend ist ein zweiter Gehäuseflansch 37 so angeordnet, daß zwischen dem ersten Gehäuseflansch 36 und der Innenwand des zweiten Gehäuseflansches 37 ein Hohlraum gebildet wird, der zur Aufnahme einer elastischen Wellenkupplung wie vorstehend beschrieben dient. An seinem axial äußeren Ende weist der zweite Gehäuseflansch 37 einen Wellenstutzen 38 zur Verbindung mit einer Antriebswelle oder einem Getriebeausgang auf.

Im axial inneren Bereich weist der zweite Gehäuseflansch 37 weiter Mittel zur Befestigung der Ankerplatten des zweiten Kupplungsteiles auf.

In der Darstellung nach Fig. 5 ist die elastische Wellenkupplung der Erfindung mit dem Bezugszeichen 40 insgesamt bezeichnet. Die Befestigung der elastischen Wellenkupplung 40 am zweiten Gehäuseflansch 37 erfolgt über lediglich schematisch dargestellte Schraubenbolzen 41, die die jeweiligen Ankerplatten durchgreifen und in Gewindebohrungen 42 des Gehäuseflansches 37 eingreifen.

In der Darstellung nach Fig. 6 ist die Befestigung der Ankerplatten des ersten Kupplungsteils am ersten Gehäuseflansch 36 gezeigt. Hier erfolgt die Verschraubung in ähnlicher Weise wie vorstehend beschrieben über Schraubenbolzen, die die Ankerplatten durch- und in Gewindebohrungen des Gehäuseflansches 36 eingreifen.

Obwohl bei diesem Gleichlaufgelenk sämtliche Beuge- und Verschiebebewegungen bestimmungsgemäß vom Kugelgelenk selbst aufgenommen werden, ist aufgrund der Elastizität der Elastomerlaschen und des eingelegten Elastomerdämpfers eine geringfügige Verschiebe- und Beugebewegung in der elastischen Wellenkupplung nicht mit letzter Sicherheit auszuschließen. Um diese letztlich unerwünschten Bewegungen aufzunehmen, stützt sich der zweite Gehäuseflansch 37 mit seinem axial inneren Bereich 43 (vergleiche Fig. 5) über einen Dichtungs- und Abstützring 44 auf dem Gelenkaußenring 35 ab. Weiter dient der Ring 44 zur sicheren Abdichtung des zwischen beiden Gehäuseflanschen gebildeten Hohlraums, der üblicherweise öl- oder fettgefüllt ist.

## Patentansprüche

1. Elastische Wellenkupplung mit einem ersten Kupplungsteil, einem zweiten Kupplungsteil und Mitteln zur Drehmomentübertragung zwischen den beiden Kupplungsteilen in Form von Elastomerlaschen oder eines geschlossen umlaufenden Elastomerrings,
dadurch **gekennzeichnet**,
daß jedes der beiden Kupplungsteile mindestens zwei Ankerelemente (1,2;3,4) aufweist, die einander jeweils diametral bezüglich der Kupplungsachse gegenüberliegen, wobei die Ankerelemente (1,2;3,4) der beiden Kupplungsteile im wesentlichen in der gleichen Radialebene der Kupplung so angeordnet sind, daß die Ankerelemente (1,2) des ersten Kupplungsteils und die Ankerelemente (3,4) des zweiten Kupplungsteils in Umfangsrichtung alternierend einander folgen, und jedes der Ankerelemente (1,2;3,4) zwei im wesentlichen nach radial auswärts weisende in Umfangsrichtung aufeinanderfolgende Ankerzapfen (9,10,11,12) zur Aufnahme der Elastomerlaschen (13) bzw. des Elastomerringes aufweist, so daß jedes der Ankerelemente (1,2;3,4) mit dem jeweils benachbarten Ankerelement über eine Elastomerlasche (13) bzw. einen Elastomerringabschnitt drehmomentübertragend verbunden ist.

2. Elastische Wellenkupplung nach Anspruch 1,
dadurch **gekennzeichnet**,
daß die Ankerelemente 1,2;3,4) aus separaten im wesentlichen gleichen Ankerplatten bestehen, die Befestigungsmittel (17,18,19,20) zur im wesentlichen starren Befestigung an der ihnen jeweils zugeordneten Welle aufweisen.

3. Elastische Wellenkupplung nach Anspruch 2,
dadurch **gekennzeichnet**,
daß die Befestigungsmittel aus jeweils mindestens einer parallel zur Kupplungsachse verlaufenden durchgehenden Bohrung (18,19) oder Gewindebohrung (18,19) in jeder Ankerplatte (1,2;3,4) zur Aufnahme eines Schraubenbolzens bestehen.

4. Elastische Wellenkupplung nach Anspruch 2 oder 3,
dadurch **gekennzeichnet**,
daß die jeweils in Umfangsrichtung benachbarten Ankerplatten (1,2;3,4) des ersten und des zweiten Kupplungsteils einander zumindest abschnittsweise in der Radialebene der Kupplung über- und in Richtung der Kupplungsachse unter Bildung eines im wesentlichen Z - förmigen Zwischenraums (23) hintergreifen.

5. Elastische Wellenkupplung nach Anspruch 4,
**gekennzeichnet** durch
jeweils ein Elastomerdämpferelement (24) zwischen den den Z - förmigen Zwischenraum (23) bildenden Flächenbereichen (22,23) der jeweils benachbarten Ankerplatten, die in Richtung der Kupplungsachse einander gegenüberliegen.

6. Elastische Wellenkupplung nach einem der Ansprüche 2 bis 5,
**gekennzeichnet** durch
jeweils ein Elastomerelement zwischen bzw. eine Elastomerbeschichtung an den Flächenbereichen der jeweils benachbarten Ankerplatten (1,2;3,4), die in der Radialebene bzw. in Umfangsrichtung einander gegenüberliegen.

7. Elastische Wellenkupplung nach einem der Ansprüche 2 bis 6,
dadurch **gekennzeichnet**,
daß die Ankerplatten (1,2;3,4) so angeordnet und/oder ausgebildet sind, daß im radial inneren Bereich, bezogen auf die Kupplungsachse, eine in Kupplungsrichtung durchgehende Ausnehmung (15) zur Aufnahme eines der Innenkontur der Ausnehmung (15) im wesentlichen formkomplementären Zentrier- und/oder Stützringes (16,28,29) gebildet wird, auf dessen radial äusserer Umfangsfläche zumindest bereichsweise die jeweilige radial innere die Ausnehmung (15) bildende Umfangsfläche der Ankerplatten (1,2;3,4) in Anlage bringbar ist.

8. Elastische Wellenkupplung nach Anspruch 7,
dadurch **gekennzeichnet**,
daß der Zentrier- und/oder Stützring (16,28,29) auf seiner Aussenfläche einen ringförmig geschlossen oder unterbrochen umlaufenden im Querschnitt wulstartigen, insbesondere torusteilschalenförmigen, rechteckigen (27), halkreisförmigen (30) oder dreieckigen Vorsprung aufweist, der mit einer dazu im wesentlichen form- und funktionskomplementären Ausnehmung in der jeweiligen Innenwandfläche der die durchgehende Ausnehmung (15) bildenden Ankerplatten (1,2;3,4) in Eingriff bringbar ist.

9. Elastische Wellenkupplung nach Anspruch 7 oder 8,
dadurch **gekennzeichnet**,
daß der Zentrier- und/oder Stützring (16) aus zwei separaten axial aufeinanderfolgenden, sich jedoch nicht unmittelbar berührenden Zentrierringen (28,29) besteht, wobei der erste Zentrierring (28) ausschließlich mit den zugeordneten Innenflächen der Ankerplatten (1,2) des ersten Kupplungsteils und der zweite Zentrierring (29) ausschließlich mit den zugeordneten Innenflächen der Ankerplatten (3,4) des zweiten Kupplungsteils zentrierend und/oder abstützend zusammenwirkt.

10. Elastische Wellenkupplung nach einem der Ansprüche 7 bis 9,
dadurch **gekennzeichnet**,
daß der Zentrier- und/oder Stützring (16,28,29) aus Kunststoff oder aus Metall besteht.

11. Elastische Wellenkupplung nach einem der Ansprüche 1 bis 10,
**gekennzeichnet** durch
im Elastomer der Elastomerlaschen (13) bzw. des Elastomerringes eingebettete, insbesondere einvulkanisierte, die zueinanderweisenden Ankerzapfen (9,10,11,12) zweier benachbarter Ankerplatten umgreifende schlingenförmige Verstärkungseinlagen (14), insbesondere aus hochfestem Fasermaterial.

12. Elastische Wellenkupplung nach Anspruch 11,
dadurch **gekennzeichnet**,
daß die Schlingen (14) nach Art einer Acht oder flach stadionförmig nach Art eines O verlaufen, wobei die zwischen den Ankerzapfen verlaufenden Schlingenschenkel parallel ausgerichtet oder durch eine Spreizfeder oval aufgespreizt sind.

13. Gleichlaufgelenk, insbesondere Kugel-Gleichlauf-Verschiebegelenk, mit einem eingangsseitigen (38) und einem ausgangsseitigen (32) Wellenstutzen, wobei die beiden Wellenstutzen (32,38) über das Gelenk (33,34,35) unter Zulassung eines Beugewinkels und einer axialen Verschiebebewegung und unter Verwendung einer elastischen Wellenkupplung (40) nach einem der Ansprüche 1 bis 12 drehmomentübertragend gekoppelt sind,
**gekennzeichnet** durch
einen ersten Gehäuseflansch (36), der antriebsseitig im wesentlichen starr mit dem Gelenk-Aussenring (35) gekoppelt ist, das Gelenk (33,34,35) abdeckt und Mittel zur starren Befestigung der Ankerelemente bzw. -platten des ersten Kupplungsteils auf seiner dem Gelenk (33,34,35) abgewandten Seite aufweist, und einen zweiten Gehäuseflansch (37), der den ersten Gehäuseflansch (36) unter Bildung eines Innenraumes zumindest bereichsweise übergreift und an seiner inneren dem ersten Gehäuseflansch (36) zugewandten Seite Mittel zur starren Befestigung der Ankerelemente bzw. -platten des zweiten Kupplungsteils sowie an seiner äusseren Seite einen Antriebs-Wellenstutzen (38) oder einen Anschluß für eine Antriebswelle aufweist.

14. Verwendung einer elastischen Wellenkupplung nach einem der Ansprüche 1 bis 12 und/oder eines Gleichlaufgelenks nach Anspruch 13 zur schwingungsmäßigen, insbesondere akustischen Abkoppelung in der Radantriebswelle eines Kraftfahrzeugs.

## Claims

1. A flexible shaft-coupling comprising a first coupling component, a second coupling component and means to transmit torque between the two coupling components in the form of elastomer shackles or a closed, circumferential elastomer ring,
**characterized** in that
each of the two coupling components comprises at least two anchoring elements (1, 2; 3, 4), arranged mutually diametrically opposite with respect to the coupling axis, the anchoring elements (1, 2; 3, 4) of the two coupling components being arrayed essentially in the same radial plane of the coupling in such manner that the anchoring elements (1, 2) of the first coupling component and the anchoring elements (3, 4) of the second coupling component are alternatingly consecutive in the circumferential direction and in that each anchoring element (1, 2; 3, 4) comprises two essentially radially outward and peripherally sequential anchoring pins (9, 10, 11, 12) to receive the elastomer shackles (13) or the elastomer ring, whereby each anchoring element (1, 2; 3, 4) is connected in torque-transmitting manner by an elastomer shackle (13) or an elastomer ring-segment with the particular adjoining anchoring element.

2. Flexible shaft-coupling defined in claim 1, **characterized** in that the anchoring elements (1, 2; 3, 4) consist of separate, substantially identical anchoring plates comprising affixing means (17, 18, 19, 20) to substantially rigidly affix the plates to their associated shaft.

3. Flexible shaft-coupling defined in claim 2, **characterized** in that the affixing means consist each of at least one continuous borehole (18, 19) parallel to the coupling axis or a threaded borehole (18, 19) in each anchoring plate (1, 2; 3, 4) to receive a threaded bolt.

4. Flexible shaft-coupling defined in either of claims 2 and 3, **characterized** in that the particular peripherally adjacent anchoring plates (1, 2; 3, 4) of the first and second coupling component are at least partly overlapping in the radial plane of the coupling and engage behind each other in the direction of the coupling axis while forming an essentially Z-shaped gap (23).

5. Flexible shaft-coupling defined in claim 4, **characterized** by an elastomer damper (24) between the surface segments (22, 23) of the particular adjoining anchoring plates forming the Z-shaped gap (23) which are opposite each other as seen in the direction of the coupling axis.

6. Flexible shaft-coupling defined in one of claims 2 through 5, **characterized** by an elastomer element being present between, or an elastomer coating being present on, the surface segments of the particular adjoining anchoring plates (1, 2; 3, 4) which are opposite each other in the radial plane or in the circumferential direction, respectively.

7. Flexible shaft-coupling defined in one of claims 2 through 6, **characterized** in that the anchoring plates (1, 2; 3, 4) are so arranged and/or designed that a clearance (15) which is continuous in the coupling direction is formed in the radially inner zone relative to the coupling axis to receive a centering and/or support ring (16, 28, 29) essentially complementary in shape to the inner contour of the clearance (15), at least parts of the radially outer circumferential surface of said ring supporting the particular radially inner circumferential surface of the anchoring plates (1, 2; 3, 4) forming the clearance (15).

8. Flexible shaft-coupling defined in claim 7, **characterized** in that the centering and/or support ring (16, 28, 29) comprises a cross-sectionally bulging, in particular toroidal, rectangular (27), semicircular (30) or triangular projection running in annular continuous or interrupted form on its outer surface and which can be made to engage a recess of essentially complementary shape and function present in the particular inner walls of the anchoring plates (1, 2; 3, 4) forming the continuous clearance (15).

9. Flexible shaft-coupling defined in either of claims 7 and 8, **characterized** in that the centering and/or support ring (16) is composed of two separate, axially consecutive but not directly touching centering rings (28, 29) of which the first centering ring (28) cooperates in centering and/or supporting manner exclusively with the associated inside surfaces of the anchoring plates (1, 2) of the first coupling component and where the second centering ring (29) cooperates in centering and/or supporting manner exclusively with the associated inner surfaces of the anchoring plates (3, 4) of the second coupling component.

10. Flexible shaft-coupling defined in one of claims 7 through 9, **characterized** in that the centering and/or support ring (16, 28, 29) is made of plastic or of a metal.

11. Flexible shaft-coupling defined in one of claims 1 through 10, **characterized** by looping, reinforcing insets (14) made in particular of high-strength fiber material and imbedded, in particular by vulcanization, into the elastomer of the elastomer shackles (13) or of the elastomer ring, said insets enclosing the mutually facing anchoring pins (9, 10, 11, 12) of two adjacent anchoring plates.

12. Flexible shaft-coupling defined in claim 11, **characterized** in that the loops (14) run like 8-figures or are flat like the O of sports stadia, the loop legs passing between the anchoring pins being mutually parallel or being spread apart into an oval shape by an expansion spring.

13. Ganged joint, in particular a ball ganged slip-joint, with an input-side shaft stub (38) and an output-side shaft stub (32), wherein the two shaft stubs (32, 38) are connected in torque-transmitting manner through the joint (33, 34, 35) so as to permit misalignment and axial displacement and using a flexible shaft-coupling (40) defined in one of claims 1 through 12,
**characterized** by
a first housing flange (36) which at the drive side is connected essentially rigidly to the joint outer ring (35) and covers the joint (33, 34, 35) and has means to rigidly affix the anchoring elements, i.e. anchoring plates of the first coupling component on its side away from the joint (33, 34, 35), and by a second housing flange (37) at least in some zones overlapping the first housing flange (36) while forming thereby an inside space and comprising means at said flange's (37) inner side facing the first housing flange (36) to rigidly affix the anchoring elements, i.e., plates of the second coupling component as well as, on its outer side, a driveshaft stub (38) or a connection means for a driveshaft.

14. Application of a flexible shaft-coupling defined in one of claims 1 through 12 and/or a ganged joint defined in claim 13 to insulate the wheel driveshaft of a motor vehicle against oscillations and especially against acoustics.

## Revendications

1. Accouplement élastique d'arbres, comprenant une première partie d'accouplement, une deuxième partie d'accouplement et des moyens pour la transmission d'un couple de rotation entre les deux parties d'accouplement sous la forme d'attaches en élastomère ou d'une bague en élastomère entourante et fermée, caractérisé en ce que chacune des deux parties d'accouplement présente au moins deux éléments d'ancrage (1, 2 ; 3, 4) qui sont respectivement diamétralement opposés par rapport à l'axe d'accouplement, les éléments d'ancrage (1, 2 ; 3, 4) des deux parties d'accouplement étant disposés essentiellement dans le même plan radial de l'accouplement de telle sorte que les éléments d'ancrage (1, 2) de la première partie d'accouplement et les éléments d'ancrage (3, 4) de la deuxième partie d'accouplement se suivent alternativement dans une direction circonférentielle, et chaque élément d'ancrage (1, 2 ; 3, 4) présentant deux tenons d'ancrage (9, 10, 11, 12) se succédant en direction circonférentielle, orientés essentiellement radialement vers l'extérieur et destinés à recevoir les attaches en élastomère (13) ou, selon le cas, la bague en élastomère, de sorte que chaque élément d'ancrage (1, 2 ; 3, 4) est relié en transmission de couple à l'élément d'ancrage respectivement adjacent par l'intermédiaire d'une attache en élastomère (13) ou, selon le cas, d'une partie de bague en élastomère.

2. Accouplement élastique d'arbres selon la revendication 1, caractérisé en ce que les éléments d'ancrage (1, 2 ; 3, 4) consistent en des plaques d'ancrage séparées essentiellement identiques, qui présentent des moyens de fixation (17, 18, 19, 20) pour leur fixation essentiellement rigide sur l'arbre qui leur est respectivement associé.

3. Accouplement élastique d'arbres selon la revendication 2, caractérisé en ce que les moyens de fixation consistent chaque fois en au moins un perçage traversant (18, 19) ou perçage fileté traversant (18, 19) pratiqué dans chaque plaque d'ancrage (1, 2 ; 3, 4), s'étendant parallèlement à l'axe d'accouplement et destiné à recevoir un boulon fileté.

4. Accouplement élastique d'arbres selon la revendication 2 ou 3, caractérisé en ce que les plaques d'ancrage (1, 2 ; 3, 4) de la première et de la deuxième partie d'accouplement qui sont respectivement adjacentes en direction circonférentielle s'engagent mutuellement au moins pour partie, par en dessus dans le plan radial de l'accouplement, et par l'arrière dans la direction de l'axe d'accouplement, en formant un espace intermédiaire (23) sensiblement en forme de Z.

5. Accouplement élastique d'arbres selon la revendication 4, caractérisé par un élément amortisseur respectif (24) en élastomère entre les zones de surface (21, 22), qui forment l'espace intermédiaire (23) en forme de Z, des plaques d'ancrage respectivement adjacentes qui -se font face dans la direction de l'axe d'accouplement.

6. Accouplement élastique d'arbres selon l'une quelconque des revendications 2 à 5, caractérisé par un élément en élastomère respectif entre les zones de surface, ou une enduction en élastomère respective sur les zones de surface, des plaques d'ancrage (1, 2 ; 3, 4) respectivement adjacentes qui se font face dans le plan radial ou en direction circonférentielle.

7. Accouplement élastique d'arbres selon l'une quelconque des revendications 2 à 6, caractérisé en ce que les plaques d'ancrage (1, 2 ; 3, 4) sont disposées et/ou configurées de telle sorte qu'est formé, dans la région radialement intérieure par rapport à l'axe d'accouplement, un évidement (15) traversant dans la direction d'accouplement pour recevoir une bague de centrage et/ou de soutien (16, 28, 29) de forme essentiellement complémentaire au contour intérieur de l'évidement (15), bague sur la face circonférentielle radialement extérieure de laquelle peut être amenée en application la face circonférentielle radialement intérieure respective, formant l'évidement (15), des plaques d'ancrage (1, 2 ; 3, 4).

8. Accouplement élastique d'arbres selon la revendication 7, caractérisé en ce que la bague de centrage et/ou de soutien (16, 28, 29) présente, sur sa surface extérieure, une saillie entourante annulairement fermée ou interrompue et présentant une forme de section du genre bourrelet, notamment en forme de coque torique partielle, de forme rectangulaire (27), demi-circulaire (30) ou triangulaire, saillie qui peut être amenée en prise avec un évidement de forme et de fonction sensiblement complémentaires, pratiqué dans la surface de paroi intérieure respective des plaques d'ancrage (1, 2 ; 3, 4) formant l'évidement traversant (15).

9. Accouplement élastique d'arbres selon la revendication 7 ou 8, caractérisé en ce que la bague de centrage et/ou de soutien (16) est constituée de deux bagues de centrage séparées (28, 29) qui se succèdent axialement, mais ne se touchent pas directement, la première bague de centrage (28) coopérant en centrage et/ou en soutien exclusivement avec les faces intérieures associées des plaques d'ancrage (1, 2) de la première partie d'accouplement, et la deuxième bague de centrage (29) exclusivement avec les faces intérieures associées des plaques d'ancrage (3, 4) de la deuxième partie d'accouplement.

10. Accouplement élastique d'arbres selon l'une quelconque des revendications 7 à 9, caractérisé en ce que la bague de centrage et/ou de soutien (16, 28, 29) est réalisée en matière plastique ou en métal.

11. Accouplement élastique d'arbres selon l'une quelconque des revendications 1 à 10, caractérisé par des inserts de renforcement (14) en forme de boucles qui sont incorporés, notamment par vulcanisation, dans l'élastomère des attaches en élastomère (13) ou, selon le cas, de la bague en élastomère, inserts qui s'engagent autour des tenons d'ancrage (9, 10, 11, 12) se faisant face de deux plaques d'ancrage adjacentes et qui sont notamment réalisés en matériau fibreux à haute résistance.

12. Accouplement élastique d'arbres selon la revendication 11, caractérisé en ce que les boucles (14) s'étendent à la manière d'un huit ou à plat en forme d'arène à la manière d'un O, les branches des boucles qui s'étendent entre les tenons d'ancrage étant orientées en parallèle ou écartées en ovale par un ressort écarteur.

13. Joint homocinétique, notamment joint coulissant homocinétique sphérique, avec un embout d'arbre du côté d'entrée (38) et un embout d'arbre du côté de sortie (32), les deux embouts d'arbres (32, 38) étant accouplés en transmission de couple par l'intermédiaire du joint (33, 34, 35) en autorisant un déplacement angulaire et un mouvement de coulissement axial et en utilisant un accouplement élastique d'arbres (40) selon l'une quelconque des revendications 1 à 12, caractérisé par une première bride de boîtier (36), qui est accouplée du côté d'entraînement essentiellement rigidement à la bague extérieure de joint (35), recouvre le joint (33, 34, 35) et présente des moyens pour la fixation rigide des éléments ou plaques d'ancrage de la première partie d'accouplement sur son côté opposé au joint (33, 34, 35), et par une deuxième bride de boîtier (37), qui engage en recouvrement au moins sectoriellement la première bride de boîtier (36) en formant un espace intérieur et qui présente, sur son côté intérieur tourné vers la première bride de boîtier (36), des moyens pour la fixation rigide des éléments ou plaques d'ancrage de la deuxième partie d'accouplement, ainsi que, sur son côté extérieur, un embout d'arbre d'entraînement (38) ou un raccordement pour un arbre d'entraînement.

14. Utilisation d'un accouplement élastique d'arbres selon l'une quelconque des revendications 1 à 12 et/ou d'un joint homocinétique selon la revendication 13 pour découpler les vibrations, notamment du point de vue acoustique, dans l'arbre d'entraînement de roue d'un véhicule automobile.
